# EUROPEAN PATENT APPLICATION

(11) **EP 4 694 256 A1**
(43) Date of publication of application: **11.02.2026**
(21) Application number: 24796112.1
(22) Date of filing: 24.04.2024
(51) Int. Cl.: H04W 12/0433, H04W 88/04

(54) **COMMUNICATION METHOD AND COMMUNICATION APPARATUS**

(30) Priority: 28.04.2023 CN 202310487238
(71) Applicant: Huawei Technologies Co., Ltd., Shenzhen, Guangdong 518129 (CN)
(72) Inventor: LI, He, Shenzhen, Guangdong 518129 (CN); WU, Rong, Shenzhen, Guangdong 518129 (CN); WU, Yizhuang, Shenzhen, Guangdong 518129 (CN); LEI, Ao, Shenzhen, Guangdong 518129 (CN)
(74) Representative: Isarpatent
(86) International application number: PCT/CN2024/089532
(87) International publication number: WO 2024/222735

(57) **Abstract**

This application provides a communication method and a communication apparatus. A session management function of a relay terminal may determine a communication address of a proximity-based service key management function of the relay terminal based on information about the relay terminal and/or information about the proximity-based service key management function of the relay terminal. In this way, the session management function of the relay terminal obtains permanent identifier information of a remote terminal from a proximity-based service key management function of the remote terminal via the proximity-based service key management function of the relay terminal, so that the session management function of the relay terminal can complete mapping between a remote terminal report and a permanent identifier of the remote terminal, to help ensure communication security of using a proximity-based service by the remote terminal via the relay terminal.

## Description

This application claims priority to Chinese Patent Application No. 202310487238.0, filed with the China National Intellectual Property Administration on April 28, 2023 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

When a user equipment (user equipment, UE) is out of network coverage or a communication signal between the user equipment and a radio access network (radio access network, RAN) device is poor, the remote UE (remote UE) may use a relay UE (relay UE) to assist communication. In other words, the remote UE obtains a service through communication between the remote UE and the relay UE and communication between the relay UE and a mobile network. A communication mode from the remote UE to the relay UE to the network may be referred to as UE-to-network relay (UE-to-network relay) communication.

When the remote UE uses a proximity-based service via the relay UE, the relay UE may send a remote UE report to a session management function of the relay UE. After receiving the remote UE report, the session management function of the relay UE may perform mapping between the remote UE report and a permanent identifier of the corresponding remote UE, to implement transmission of the proximity-based service of the remote UE via the relay UE. However, the session management function of the relay UE may fail to accurately determine information about the remote UE because the permanent identifier of the remote UE is not available in the session management function of the relay UE. Consequently, security of providing a service for the remote UE cannot be ensured.

### SUMMARY

This application provides a communication method and a communication apparatus, so that a session management function of a relay terminal can obtain a permanent identifier of a remote terminal, to help ensure communication security of using a proximity-based service by the remote terminal via the relay terminal.

According to a first aspect, a communication method is provided. The method may be performed by a session management function of a relay terminal, or may be performed by a module or a unit in a session management function of a relay terminal. The following uniformly uses the session management function of the relay terminal for description.

The method includes: The session management function of the relay terminal receives a remote terminal report from the relay terminal when a remote terminal uses a proximity-based service via the relay terminal, where the remote terminal report corresponds to the remote terminal. The session management function of the relay terminal obtains first information based on the remote terminal report, where the first information includes information about the relay terminal and/or information about a proximity-based service key management function of the relay terminal. The session management function of the relay terminal obtains first address information of the proximity-based service key management function of the relay terminal based on the first information, where the first address information indicates a communication address of the proximity-based service key management function of the relay terminal. The session management function of the relay terminal obtains permanent identifier information of the remote terminal from a proximity-based service key management function of the remote terminal based on the first address information via the proximity-based service key management function of the relay terminal.

In the foregoing method, the session management function of the relay terminal may determine the communication address of the proximity-based service key management function of the relay terminal based on the information about the relay terminal and/or the information about the proximity-based service key management function of the relay terminal. In this way, the session management function of the relay terminal obtains the permanent identifier information of the remote terminal from the proximity-based service key management function of the remote terminal via the proximity-based service key management function of the relay terminal, so that the session management function of the relay terminal can complete mapping between the remote terminal report and a permanent identifier of the remote terminal. This ensures communication security of using the proximity-based service by the remote terminal via the relay terminal.

With reference to the first aspect, in a possible implementation, that the session management function of the relay terminal obtains first information based on the remote terminal report includes: The session management function of the relay terminal obtains the first information when the permanent identifier information of the remote terminal is not available in the session management function of the relay terminal.

In the foregoing method, the session management function of the relay terminal obtains the first information only when the permanent identifier information of the remote terminal is not available in the session management function of the relay terminal. In other words, the session management function of the relay terminal obtains the permanent identifier information of the remote terminal obtained from the proximity-based service key management function of the remote terminal via the proximity-based service key management function of the relay terminal only when the permanent identifier information of the remote terminal is not available in the session management function of the relay terminal. When the session management function of the relay terminal has the permanent identifier information of the remote terminal, a procedure of obtaining the permanent identifier information of the remote terminal may not be repeated. This helps reduce signaling overheads.

With reference to the first aspect or any implementation of the first aspect, in a possible implementation, the information about the relay terminal includes a routing indicator (routing indicator, RID) of the relay terminal, a home public land mobile network (home public land mobile network, HPLMN) identifier of the relay terminal, and/or identification information of the relay terminal.

With reference to the first aspect or any implementation of the first aspect, in a possible implementation, the information about the proximity-based service key management function of the relay terminal includes the first address information.

With reference to the first aspect or any implementation of the first aspect, in a possible implementation, the information about the proximity-based service key management function of the relay terminal includes identification information of the proximity-based service key management function of the relay terminal, and the identification information of the proximity-based service key management function of the relay terminal is used to obtain the first address information.

With reference to the first aspect or any implementation of the first aspect, in a possible implementation, the session management function of the relay terminal may directly or indirectly obtain the first information.

With reference to the first aspect or any implementation of the first aspect, in a possible implementation, that the session management function of the relay terminal receives a remote terminal report from the relay terminal includes: The session management function of the relay terminal receives a first message from the relay terminal, where the first message includes the remote terminal report. The first message further includes the first information, or the remote terminal report includes the first information. That the session management function of the relay terminal obtains first information includes: The session management function of the relay terminal obtains the first information from the first message or the remote terminal report.

With reference to the first aspect or any implementation of the first aspect, in a possible implementation, the information about the relay terminal includes the identification information of the relay terminal. That the session management function of the relay terminal obtains first information includes: The session management function of the relay terminal obtains the identification information of the relay terminal based on identification information of a session, where the session is a session used by the relay terminal to perform transmission of a service of the remote terminal.

With reference to the first aspect or any implementation of the first aspect, in a possible implementation, the information about the relay terminal includes the HPLMN identifier of the relay terminal. That the session management function of the relay terminal obtains first information includes: The session management function of the relay terminal obtains an HPLMN identifier of the session management function of the relay terminal, where the HPLMN identifier of the session management function of the relay terminal is the same as the HPLMN identifier of the relay terminal.

With reference to the first aspect or any implementation of the first aspect, in a possible implementation, that the session management function of the relay terminal obtains first address information of the proximity-based service key management function of the relay terminal based on the first information includes: The session management function of the relay terminal obtains second address information of the proximity-based service key management function of the relay terminal based on the first information, where the second address information includes address information in a fully qualified domain name (fully qualified domain name, FQDN) format and/or address information in a network access identifier (network access identity, NAI) format. The session management function of the relay terminal obtains the first address information based on the second address information.

With reference to the first aspect or any implementation of the first aspect, in a possible implementation, the first information is the identification information of the relay terminal. That the session management function of the relay terminal obtains second address information of the proximity-based service key management function of the relay terminal based on the first information includes: The session management function of the relay terminal obtains second information based on the identification information of the relay terminal, where the second information includes: the routing indicator RID of the relay terminal, the HPLMN identifier of the relay terminal, and/or the identification information of the proximity-based service key management function of the relay terminal. The session management function of the relay terminal obtains the second address information of the proximity-based service key management function of the relay terminal based on the second information.

According to a second aspect, a communication method is provided. The method may be performed by a relay terminal, or may be performed by a module or a unit in a relay terminal. The following uniformly uses the relay terminal for description.

The method includes: The relay terminal determines a first message when a remote terminal uses a proximity-based service via the relay terminal, where the first message includes first information and a remote terminal report corresponding to the remote terminal, or the first message includes a remote terminal report and the remote terminal report includes first information. The first information includes information about the relay terminal and/or information about a proximity-based service key management function of the relay terminal. The relay terminal sends the first message to a session management function of the relay terminal.

In the foregoing method, the remote terminal may provide the information about the relay terminal and/or the information about the proximity-based service key management function of the relay terminal for the session management function of the relay terminal, so that the session management function of the relay terminal can determine a communication address of the proximity-based service key management function of the relay terminal based on the information about the relay terminal and/or the information about the proximity-based service key management function of the relay terminal. In this way, the session management function of the relay terminal obtains permanent identifier information of the remote terminal from a proximity-based service key management function of the remote terminal via the proximity-based service key management function of the relay terminal, so that the session management function of the relay terminal can complete mapping between the remote terminal report and a permanent identifier of the remote terminal. This ensures communication security of using the proximity-based service by the remote terminal via the relay terminal.

With reference to the second aspect, in a possible implementation, the information about the relay terminal includes a RID of the relay terminal, an HPLMN identifier of the relay terminal, and/or identification information of the relay terminal.

With reference to the second aspect or any implementation of the second aspect, in a possible implementation, the information about the proximity-based service key management function of the relay terminal includes first address information of the proximity-based service key management function of the relay terminal, where the first address information indicates the communication address of the proximity-based service key management function of the relay terminal.

With reference to the second aspect or any implementation of the second aspect, in a possible implementation, the information about the proximity-based service key management function of the relay terminal includes identification information of the proximity-based service key management function of the relay terminal, and the identification information of the proximity-based service key management function of the relay terminal is used to obtain first address information. The first address information indicates the communication address of the proximity-based service key management function of the relay terminal.

According to a third aspect, a communication method is provided. The method may be performed by a session management function of a relay terminal and a proximity-based service key management function of the relay terminal, or may be performed by modules or units in a session management function of a relay terminal and a proximity-based service key management function of the relay terminal. The following uniformly uses the session management function of the relay terminal and the proximity-based service key management function of the relay terminal for description. For more detailed descriptions of the method performed by the session management function of the relay terminal in the third aspect, refer to the first aspect. For beneficial effects that can be achieved, refer to the first aspect or the implementations of the first aspect.

The method includes: The session management function of the relay terminal receives a remote terminal report corresponding to a remote terminal when providing a proximity-based service for the remote terminal. The session management function of the relay terminal obtains first information based on the remote terminal report, where the first information includes information about the relay terminal and/or information about the proximity-based service key management function of the relay terminal. The session management function of the relay terminal obtains first address information of the proximity-based service key management function of the relay terminal based on the first information, where the first address information indicates a communication address of the proximity-based service key management function of the relay terminal. The session management function of the relay terminal requests, based on the first address information, to obtain permanent identifier information of the remote terminal from the proximity-based service key management function of the relay terminal. The proximity-based service key management function of the relay terminal sends, to the session management function of the relay terminal, the permanent identifier information of the remote terminal obtained from a proximity-based service key management function of the remote terminal.

With reference to the third aspect, in a possible implementation, that the session management function of the relay terminal obtains first information based on the remote terminal report includes: The session management function of the relay terminal obtains the first information when the permanent identifier information of the remote terminal is not available in the session management function of the relay terminal.

With reference to the third aspect or any implementation of the third aspect, in a possible implementation, the information about the relay terminal includes a RID of the relay terminal, an HPLMN identifier of the relay terminal, and/or identification information of the relay terminal.

With reference to the third aspect or any implementation of the third aspect, in a possible implementation, the information about the proximity-based service key management function of the relay terminal includes the first address information.

With reference to the third aspect or any implementation of the third aspect, in a possible implementation, the information about the proximity-based service key management function of the relay terminal includes identification information of the proximity-based service key management function of the relay terminal, and the identification information of the proximity-based service key management function of the relay terminal is used to obtain the first address information.

With reference to the third aspect or any implementation of the third aspect, in a possible implementation, that the session management function of the relay terminal receives a remote terminal report corresponding to a remote terminal includes: The session management function of the relay terminal receives a first message from the relay terminal, where the first message includes the remote terminal report. The first message further includes the first information, or the remote terminal report includes the first information. That the session management function of the relay terminal obtains first information includes: The session management function of the relay terminal obtains the first information from the first message or the remote terminal report.

According to a fourth aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a communication unit.

In an implementation, the apparatus is a session management function of a relay terminal or a relay terminal. When the apparatus is the session management function of the relay terminal or the relay terminal, the communication unit may be a transceiver, an input/output interface, or a communication interface, and the processing unit may be at least one processor. Optionally, the transceiver is a transceiver circuit. Optionally, the input/output interface is an input/output circuit.

In another implementation, the apparatus is a chip, a chip system, or a circuit used in the session management function of the relay terminal or the relay terminal. When the apparatus is the chip, the chip system, or the circuit used in the session management function of the relay terminal or the relay terminal, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fifth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a session management function of a relay terminal or a relay terminal.

In another implementation, the apparatus is a chip, a chip system, or a circuit used in a session management function of a relay terminal or a relay terminal.

According to a sixth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to a seventh aspect, a processor is provided, and is configured to perform the methods provided in the foregoing aspects.

Unless otherwise specified, or if operations such as sending and obtaining/receiving related to the processor do not conflict with actual functions or internal logic in related descriptions, the operations may be understood as operations such as output, receiving, and input of the processor, or may be understood as operations such as sending and receiving performed by a radio frequency circuit and an antenna. This is not limited in this application.

According to an eighth aspect, a computer-readable storage medium is provided. The computer-readable storage medium stores program code to be executed by a device, and the program code is used to perform the method provided in any one of the foregoing aspects or the implementations of the foregoing aspects.

According to a ninth aspect, a computer program product including instructions is provided. When the computer program product runs on a computer, the computer is enabled to perform the method provided in any one of the foregoing aspects or the implementations of the foregoing aspects.

According to a tenth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a quantity of chips that specifically implement the method in this application is not limited in this application. For example, the method may be performed by one chip, or may be performed by two or more chips. In addition, when there are two or more chips that implement the method in this application, a chip vendor is not limited. The chips may be from a same vendor or from different vendors.

According to an eleventh aspect, a communication system is provided, and includes the foregoing session management function of the relay terminal and/or the relay terminal. Optionally, the communication system further includes a proximity-based service key management function of the relay terminal.

According to a twelfth aspect, a computer program is provided. When the computer program is run on a computer, the method provided in any one of the foregoing aspects or the implementations of the foregoing aspects is performed.

### BRIEF DESCRIPTION OF DRAWINGS

FIG. 1 is a diagram of a network architecture applicable to an embodiment of this application;
FIG. 2 is a schematic flowchart of establishing PC5 security over a user plane;
FIG. 3 is a schematic flowchart of a communication method 300 according to this application;
FIG. 4 is an example of the method 300;
FIG. 5 is another example of the method 300;
FIG. 6 is another example of the method 300;
FIG. 7 is a diagram of a structure of an apparatus according to an embodiment of this application; and
FIG. 8 is another diagram of a structure of an apparatus according to an embodiment of this application.

### DESCRIPTION OF EMBODIMENTS

The following describes the technical solutions in embodiments of this application with reference to the accompanying drawings.

For ease of understanding embodiments of this application, before embodiments of this application are described, the following descriptions are first provided.

"Indicating" may include direct indicating and indirect indicating, or "indicating" may be explicitly and/or implicitly indicating. The first, second, third, and various numbers are merely used for differentiation for convenient description, and are not intended to limit the scope of embodiments of this application, for example, used for differentiation between different fields and different information. A related "protocol" may be a standard protocol in the communication field, for example, may include a long term evolution (long term evolution, LTE) protocol, a new radio (new radio, NR) protocol, and a related protocol applied to a future communication system. This is not limited in this application. The words such as "for example", "example", and "in an (another) example" are used to represent giving an example, an illustration, or a description. Any embodiment or design solution described as an "example" in this application should not be explained as being more preferable or having more advantages than another embodiment or design solution. The terms "include", "have", and other variants thereof all mean "include but is not limited to", unless otherwise specifically emphasized in another manner. "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof means any combination of these items, including a singular item (piece) or any combination of plural items (pieces). For example, at least one of a, b, and c may indicate a, b, c, a and b, a and c, b and c, or a, b, and c. Each of a, b, and c may be in a singular form or a plural form. Related descriptions about sending a message, information, or data by a network element A to a network element B, and receiving, by the network element B, the message, information, or data from the network element A are intended to describe a network element to which the message, information, or data is to be sent. Whether the message, information, or data is directly sent or indirectly sent via another network element is not limited. Descriptions such as "when...", "in a case of...", and "if" all mean that a device performs corresponding processing in an objective case, and are not limited to time, and the device is not required to perform a determining action during implementation. This does not mean that there is another limitation.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The technical solutions in embodiments of this application may be applied to various communication systems, for example, an LTE system, a frequency division duplex (frequency division duplex, FDD) system, a time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or an NR system, a 6th generation (6th generation, 6G) system, or a future communication system. The 5G mobile communication system in this application includes a non-standalone (non-standalone, NSA) 5G mobile communication system or a standalone (standalone, SA) 5G mobile communication system. The communication system may alternatively be a public land mobile communication network (public land mobile network, PLMN) communication system, a device-to-device (device-to-device, D2D) communication system, a machine-to-machine (machine-to-machine, M2M) communication system, an internet of things (internet of Things, IoT) communication system, a vehicle to everything (vehicle to everything, V2X) communication system, an uncrewed aerial vehicle (uncrewed aerial vehicle, UAV) communication system, or another communication system.

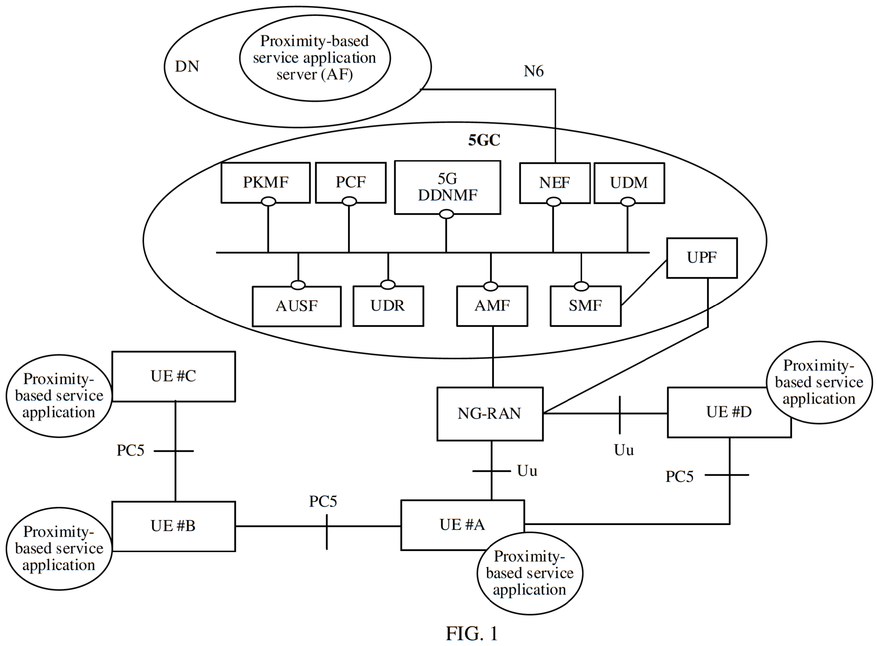

For example, FIG. 1 is a diagram of a network architecture applicable to an embodiment of this application. As shown in FIG. 1, the network architecture may include the following devices or network elements.
1. A user equipment (user equipment, UE) may be referred to as a terminal device, a terminal, an access terminal, a subscriber unit, a subscriber station, a mobile station, a remote station, a remote terminal, a mobile device, a user terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an uncrewed aerial vehicle, a wearable device, a terminal device in a 5G network, a terminal device in an evolved public land mobile communication network (public land mobile network, PLMN), or the like. This is not limited in embodiments of this application. The UE may be connected to a next generation radio access network (next generation radio access network, NG-RAN) device through a Uu interface. For example, a UE #A and a UE #D shown in FIG. 1 are connected to an NG-RAN through a Uu interface.
   A UE that can be used for proximity-based service (proximity-based service, ProSe) communication needs to have a proximity-based service application (ProSe application) function. Two UEs having the proximity-based service application (proximity-based service application, ProSe application) function may be connected to each other through a PC5 interface. For example, the UE #A and a UE #B shown in FIG. 1 are connected to each other through a PC5 interface, and the UE #B and a UE #C are connected to each other through a PC5 interface, the UE #A and the UE #D are connected through a PC5 interface.
2. An access network (access network, AN) is used to provide a network access function for an authorized user in a specific area, and can use transmission tunnels with different quality based on user levels, service requirements, and the like. The access network may be an access network using different access technologies. Current access network technologies include a radio access network technology used in a 3rd generation (3rd generation, 3G) system, a radio access network technology used in a 4G system, an NG-RAN technology shown in FIG. 1 (for example, a radio access technology used in a 5G system), or the like.

An access network that implements an access network function based on a wireless communication technology may be referred to as a radio access network (radio access network, RAN). The radio access network can manage radio resources, provide an access service for the UE, and complete forwarding of a control signal and user data between the terminal and a core network.

The radio access network device may be, for example, a base station (NodeB), an evolved NodeB (evolved NodeB, eNB or eNodeB), a next generation node base station (next generation Node Base station, gNB) in a 5G mobile communication system, a base station in a future mobile communication system, an access point (access point, AP) in a Wi-Fi wireless hotspot (Wi-Fi) system, or the like, or may be a radio controller in a cloud radio access network (cloud radio access network, CRAN) scenario. Alternatively, the radio access network device may be a relay station, an access point, a vehicle-mounted device, an uncrewed aerial vehicle, a wearable device, a network device in a 5G network, a network device in an evolved PLMN, or the like. A specific technology used by the radio access network device and a specific device form are not limited in embodiments of this application.

3. An access management network element is mainly used for mobility management and access management, is responsible for transferring a user policy between the user equipment and a policy control function (policy control function, PCF) network element, and may be configured to implement a function other than session management in a mobility management entity (mobility management entity, MME) function, for example, a lawful interception function or an access authorization (authentication) function.

In the 5G communication system, the access management network element may be an access and mobility management function (access and mobility management function, AMF) network element. In the future communication system, the access management network element may still be the AMF network element, or may have another name. This is not limited in this application.

4. A session management network element is mainly configured to: manage a session, allocate and manage an internet protocol (internet protocol, IP) address of the user equipment, select an endpoint that can manage a user plane function interface and a policy control and charging function interface, perform downlink data notification, and the like.

In the 5G communication system, the session management network element may be a session management function (session management function, SMF) network element. In the future communication system, the session management network element may still be the SMF network element, or may have another name. This is not limited in this application.

5. A user plane network element is configured to: perform packet routing and forwarding, perform quality of service (quality of service, QoS) processing on user plane data, complete user plane data forwarding, perform session/flow-level charging statistics collection, implement a bandwidth limiting function, and the like.

In the 5G communication system, the user plane network element may be a user plane function (user plane function, UPF) network element. In the future communication system, the user plane network element may still be the UPF network element, or may have another name. This is not limited in this application.

6. A data network element is configured to provide a network for data transmission.

In the 5G communication system, the data network element may be a data network (data network, DN) element. In the future communication system, the data network element may still be the DN network element, or may have another name. This is not limited in this application.

7. A policy control network element is configured to: provide guidance on a unified policy framework for network behavior, provide policy rule information for a control plane function network element (for example, the AMF or the SMF network element), and the like.

In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be the PCF network element, or may have another name. This is not limited in this application.

8. A data management network element is configured to perform user equipment identification handling, access authentication, registration, mobility management, and the like.

In the 5G communication system, the data management network element may be a unified data management (unified data management, UDM) network element. In the 4G communication system, the data management network element may be a home subscriber server (home subscriber server, HSS) network element. In the future communication system, the data management network element may still be the UDM network element, or may have another name. This is not limited in this application.

9. A data repository network element is configured to be responsible for an access function of subscription data, policy data, application data and other types of data.

In the 5G communication system, the data repository network element may be a unified data repository (unified data repository, UDR) network element. In the future communication system, the data repository network element may still be the UDR network element, or may have another name. This is not limited in this application.

10. A network exposure function (network exposure function, NEF) entity is used to securely open, to the outside, a service and a capability that are provided by a 3GPP network function.

11. A proximity-based service application server (ProSe application server) may be an application function (application function, AF) of a data network (data network, DN), or may be an application server that provides proximity-based services. For example, an AF having a proximity-based service application server function has all functions of the AF defined in Release 23.501 R-15 and related functions used for proximity-based services. In a user plane architecture, the proximity-based service application server performs user plane communication with the UE through a UE-RAN-UPF-AF path. In a control plane architecture, the proximity-based service application server may further communicate with another network function (network function, NF) in a 5G core (5G core, 5GC) network via the NEF, for example, communicate with the PCF via the NEF. If the proximity-based service application server is the AF of the DN, and the AF is deployed by an operator of the 5GC, the proximity-based service application server may alternatively directly communicate with another NF in the 5GC without the NEF, for example, directly communicate with the PCF.

12. A 5G direct communication discovery name management function (direct discovery name management function, DDNMF) is mainly used to allocate open proximity-based service discovery (open ProSe discovery) and process a mapping relationship between a proximity-based service application identifier (ProSe application identifier) and a proximity-based service application code (ProSe application code).

13. Proximity-based service key management function (ProSe key management function, PKMF): The PKMF is not shown in FIG. 1. The PKMF may be a network element in the 5GC, or may be a network element outside the 5GC. This is not limited. The PKMF may generate and distribute, for the UE that uses the proximity-based service, a key used for a PC5 interface connection. The UE may interact with the PKMF over the user plane, to obtain the key used for the PC5 interface.

It should be understood that the functions or network elements shown in FIG. 1 may be understood as network elements configured to implement different functions, for example, may be combined into a network slice based on a requirement. These network elements may be independent devices, may be integrated into a same device to implement different functions, may be network elements in a hardware device, may be software functions running on dedicated hardware, or may be virtualized functions instantiated on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

It should be further understood that the network architecture applicable to embodiments of this application shown in FIG. 1 is merely an example for description, and the network architecture applicable to embodiments of this application is not limited thereto. Any network architecture that can implement functions of the network elements is applicable to embodiments of this application.

With rapid development of mobile communication, universal use of new service types, for example, data services such as a video service and virtual reality (virtual reality, VR)/augmented reality (augmented reality, AR), increases a bandwidth requirement of a user. D2D communication allows direct communication between UEs, and the UEs may share spectrum resources with cell users under control of a cell network, so that utilization of the spectrum resources is effectively improved. Currently, the D2D communication is already applied to a 4G network system, and is collectively referred to as proximity-based service (proximity-based service, ProSe) communication.

The D2D communication includes one-to-many communication (one-to-many communication) and one-to-one communication (one-to-one communication). The one-to-many communication corresponds to multicast and broadcast communication, and the one-to-one communication corresponds to unicast communication. In the one-to-one communication, if a transmitting UE and a receiving UE are in a short distance range, the transmitting UE and the receiving UE may directly communicate with each other after mutual discovery. In the D2D communication, the UE directly performs communication through the PC5 interface, and the PC5 interface may be used for information transmission on a data plane and a signaling plane.

When the UE is out of network coverage or a communication signal between the UE and the RAN is poor, a remote UE may use a relay UE to assist communication. In other words, the remote UE obtains a service through communication between the remote UE and the relay UE and communication between the relay UE and a mobile network. Communication between the UE outside the network coverage and the network may be supported in an extension manner by establishing a communication mode from the remote UE to the relay UE to the network.

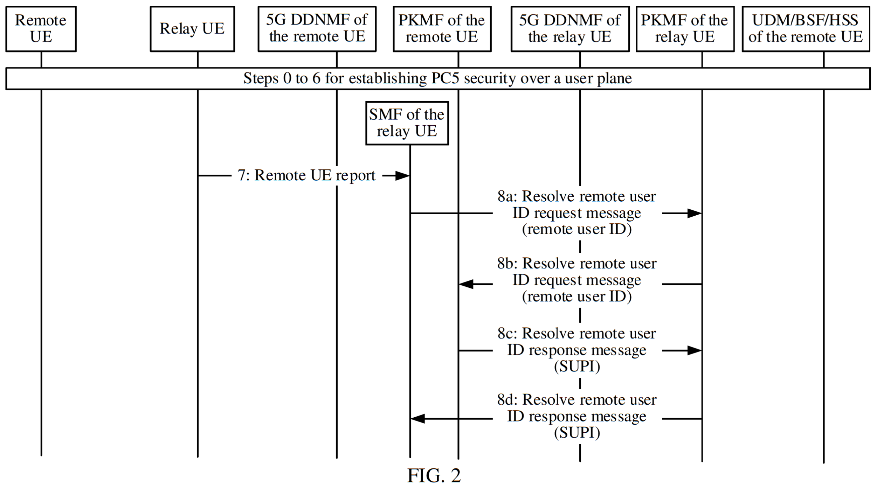

FIG. 2 is a schematic flowchart of establishing PC5 security over a user plane.

For detailed descriptions of steps in FIG. 2, refer to section 6.3.3.2.2 in TS 33.503. As shown in FIG. 2, when a remote UE uses a proximity-based service via a relay UE, the relay UE may send a remote UE report (remote UE report) to an SMF of the relay UE as specified TS 23.304, where the remote UE report may carry a remote user ID (remote user ID) and remote UE information (remote UE info). After receiving the remote UE report, the SMF of the relay UE may perform mapping between the remote UE report and a permanent identifier of the corresponding remote UE, to implement transmission of the proximity-based service of the remote UE via the relay UE.

However, the SMF of the relay UE may fail to perform the mapping between the remote UE report and the permanent identifier of the remote UE because the permanent identifier of the remote UE is not available in the SMF of the relay UE. In this case, as shown in step 8a to step 8d in FIG. 2, the SMF of the relay UE may obtain the permanent identifier of the remote UE from a PKMF of the remote UE via a PKMF of the relay UE. Currently, how the SMF of the relay UE searches for the PKMF of the relay UE is not specified in a protocol. Consequently, the SMF of the relay UE cannot obtain, or obtain a real identity of the remote UE, and security of the remote UE cannot be ensured. As a result, security of using the proximity-based service by the remote UE via the relay UE cannot be ensured.

For the foregoing problem, this application provides a communication method and a communication apparatus, so that the SMF of the relay UE can find the PKMF of the relay UE. In this way, communication security of using the proximity-based service by the remote terminal via the relay terminal is ensured.

The following describes the communication method provided in this application.

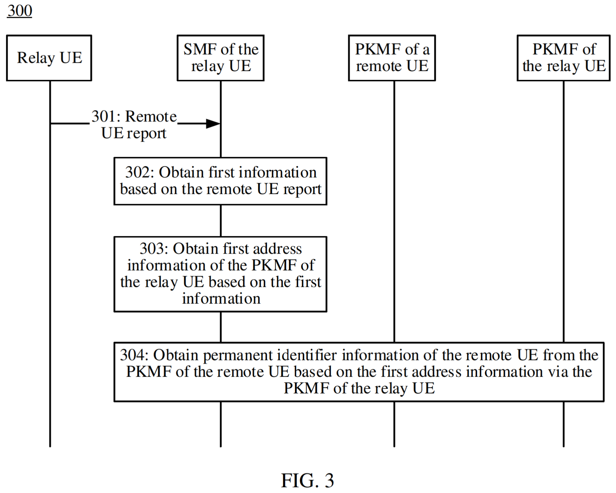

FIG. 3 is a schematic flowchart of a communication method 300 according to this application. The method 300 may be performed by a relay UE, an SMF of the relay UE, a PKMF of the relay UE, and a PKMF of a remote UE, or may be performed by modules or units (for example, circuits or chips) in a relay UE, an SMF of the relay UE, a PKMF of the relay UE, and a PKMF of a remote UE. The following uniformly uses the relay UE, the SMF of the relay UE, the PKMF of the relay UE, and the PKMF of the remote UE for description.

It should be noted that, in this embodiment of this application, the SMF and the PKMF of the relay UE may be understood as an SMF and a PKMF that provide services for the relay UE, or an SMF and a PKMF that store related information about the relay UE. The SMF and the PKMF of the relay UE may also be referred to as a relay SMF and a relay PKMF. Similarly, the PKMF of the remote UE may also be understood as a PKMF that provides a service for the remote UE, or a PKMF that stores related information about the remote UE. The PKMF of the remote UE may also be referred to as a remote PKMF. Other network elements of the relay UE and the remote UE are similar to this, and are not explained below.

The method 300 may include at least a part of the following content.

Step 301: When the remote UE uses a proximity-based service via the relay UE, the relay UE sends a remote UE report to the SMF of the relay UE. Correspondingly, the SMF of the relay UE receives the remote UE report from the relay UE.

The remote UE report corresponds to the remote UE that uses the proximity-based service via the relay UE, and may include a remote user ID and information about the remote UE. The remote user ID may include a user plane proximity-based service remote user key identifier (User Plane ProSe Remote User Key Identifier, UP-PRUK ID) or a control plane proximity-based service remote user key (Control Plane ProSe Remote User Key, CP-PRUK ID). The information about the UE may include medium access control address (medium access control address, MAC address) information of the UE.

Step 302: The SMF of the relay UE obtains first information based on the received remote UE report.

The first information may include information about the relay UE and/or information about the PKMF of the relay UE. The information about the relay UE and the information about the PKMF of the relay UE are information that may be used to determine first address information of the PKMF of the relay UE. The first address information of the PKMF of the relay UE indicates a communication address of the PKMF of the relay UE, for example, an internet protocol (Internet Protocol, IP) address of the PKMF of the relay UE.

In a possible implementation, the information about the relay UE may include at least one of a RID of the relay UE, an HPLMN identifier of the relay UE, or identification information of the relay UE.

The identification information of the relay UE may include at least one piece of the following information: a subscription permanent identifier (Subscription Permanent Identifier, SUPI), a subscription concealed identifier (Subscription Concealed Identifier, SUCI), a generic public subscription identifier (Generic Public Subscription Identifier, GPSI), a permanent equipment identifier (Permanent Equipment Identifier, PEI), a (Mobile Subscriber International ISDN/PSTN number MSISDN), where ISDN is an integrated service digital network (Integrated Service Digital Network) and PSTN is a public switched telephone network (Public Switched Telephone Network), or the like. The MSISDN may be understood as an identity that can be disclosed externally by a terminal, for example, a phone number of the terminal.

In a possible implementation, the information about the PKMF of the relay UE may include the first address information of the PKMF of the relay UE and/or identification information of the PKMF of the relay UE. The identification information of the PKMF of the relay UE is used to obtain the first address information of the PKMF of the relay UE.

For example, the identification information of the PKMF of the relay UE may include a 5G PKMF address (5G PKMF address) of the PKMF of the relay UE.

A manner in which the SMF of the relay UE obtains the first information is not limited in this application.

In a possible implementation, the SMF of the relay UE may directly obtain the first information. For example, when the first information is the identification information of the relay UE, the SMF may directly obtain the identification information of the relay UE.

In another possible implementation, the SMF of the relay UE may indirectly obtain the first information. For example, when a first information is the HPLMN identifier of the relay UE, the SMF of the relay UE may first obtain the identification information of the relay UE, and then obtain the HPLMN identifier of the relay UE based on the identification information of the relay UE. For another example, when the first identifier is the identification information of the PKMF of the relay UE, the SMF of the relay UE may first obtain the identification information of the relay UE, obtain the HPLMN ID of the relay UE based on the identification information of the relay UE, and then obtain the identification information of the PKMF of the relay UE from preconfigured information.

In another possible implementation, the SMF of the relay UE may obtain the first information from the relay UE. For example, the relay UE sends a first message to the SMF of the relay UE, and the SMF of the relay UE may obtain the first information by using the first message. Optionally, the first message may include the remote UE report and the first information. In other words, the first information is included in the first message but is outside the remote UE report. Optionally, the first message may include the remote UE report, and the remote UE report includes the first information. In other words, the first information is included in the first message and is in the remote UE report. The remote UE report and the first information each may be included in a session management container (session management container, SM container).

In another possible implementation, the SMF of the relay UE may obtain the first information by using identification information of a session (for example, a protocol data unit (protocol data unit, PDU) session). Optionally, the identification information of the session may be carried in a first message sent by the relay UE to the SMF of the relay UE. For example, the SMF of the relay UE may obtain the first information of the relay UE from a locally stored context based on a received PDU session ID. For example, when the first information is the SUPI of the relay UE, the SMF of the relay UE obtains the SUPI of the relay UE from the locally stored context based on identification information of the PDU session. For another example, when the first information is the HPLMN identifier of the relay UE, the SMF of the relay UE obtains the SUPI of the relay UE from the locally stored context based on identification information of the PDU session, and then obtains the HPLMN identifier of the relay UE based on the SUPI of the relay UE.

In another possible implementation, when the first information or the information about the relay UE includes the HPLMN identifier of the relay UE, the SMF of the relay UE may obtain an HPLMN identifier of the SMF of the relay UE, where the HPLMN identifier is the same as the HPLMN identifier of the relay UE. It may be understood as: The SMF of the relay UE and the relay UE belong to a same HPLMN, and the HPLMN identifier of the SMF of the relay UE is the HPLMN identifier of the relay UE.

In a possible implementation, step 302 specifically includes: The SMF of the relay UE obtains the first information when permanent identifier information of the remote UE is not available in the SMF of the relay UE. The SMF of the relay UE obtains the first information when the permanent identifier information of the remote UE is not available in the SMF of the relay UE, so that repeated execution of an obtaining procedure can be avoided.

Step 303: The SMF of the relay UE obtains the first address information of the PKMF of the relay UE based on the first information.

In other words, the SMF of the relay UE determines the PKMF of the relay UE based on the first information.

A manner in which the SMF of the relay UE obtains the first address information of the PKMF of the relay UE based on the first information is not limited in this application.

In a possible implementation, when the first information, for example, the SUPI of the relay UE, the RID of the relay UE, the 5G PKMF address of the PKMF of the relay UE, or the HPLMN identifier of the relay UE, can be directly used to determine or find the PKMF of the relay UE (or be directly used to determine the IP address of the PKMF of the relay UE), the SMF of the relay UE directly determines, based on the first information, the PKMF of the relay UE for communication.

In another possible implementation, when the first information, for example, the SUPI of the relay UE, the RID of the relay UE, the 5G PKMF address of the PKMF of the relay UE, or the HPLMN identifier of the relay UE, cannot be directly used to determine or find the PKMF of the relay UE (or cannot be directly used to determine the IP address of the PKMF of the relay UE), the SMF of the relay UE may obtain second address information of the PKMF of the relay UE based on the first information, and then obtain the first address information of the PKMF of the relay UE based on the second address information of the PKMF of the relay UE. The second address information may include address information in an FQDN format and/or address information in a NAI format.

For example, when the first information is the 5G PKMF address of the PKMF of the relay UE or the RID of the relay UE, the SMF of the relay UE may obtain the address information in the FQDN format and/or the address information in the NAI format of the PKMF of the relay UE from a domain name server (domain name system, DNS) or a network repository function (network repository function, NRF) based on the 5G PKMF address of the PKMF of the relay UE or the RID of the relay UE, and then obtain the IP address of the PKMF of the relay UE.

In another possible implementation, when the first information, for example, the SUPI of the relay UE, the RID of the relay UE, the 5G PKMF address of the PKMF of the relay UE, or the HPLMN identifier of the relay UE, cannot be directly used to determine or find the PKMF of the relay UE (or cannot be directly used to determine the IP address of the PKMF of the relay UE), the SMF of the relay UE obtains second information based on the first information, obtains second address information of the PKMF of the relay UE based on the second information, and then obtains the first address information of the PKMF of the relay UE based on the second address information of the PKMF of the relay UE. The second information includes at least one of the RID of the relay UE, the HPLMN identifier of the relay UE, or the identification information of the PKMF of the relay UE, and the second address information may include address information in an FQDN format and/or address information in a NAI format.

For example, when the first information is the SUPI of the relay UE, the SMF of the relay UE may obtain the SUPI of the relay UE based on the PDU session ID used for transmission of a service of the remote UE, obtain the 5G PKMF address of the PKMF of the relay UE or the RID of the relay UE from a PCF or a 5G DDNMF based on the SUPI of the relay UE, obtain the address information in the FQDN format and/or the address information in the NAI format of the PKMF of the relay UE based on the 5G PKMF address of the PKMF of the relay UE or the RID of the relay UE, and then obtain the IP address of the PKMF of the relay UE.

Step 304: The SMF of the relay UE obtains the permanent identifier information of the remote UE from the PKMF of the remote UE based on the first address information of the PKMF of the relay UE via the PKMF of the relay UE.

The permanent identifier information of the remote UE may be or may indicate an SUPI of the remote UE.

For example, the SMF of the relay UE may send, based on the first address information of the PKMF of the relay UE, a resolve remote user ID request (resolve remote user request) message to the PKMF of the relay UE, where the message includes the remote user ID. After receiving the resolve remote user ID request message from the SMF of the relay UE, the PKMF of the relay UE may send the resolve remote user ID request message to the PKMF of the remote UE, where the message includes the remote user ID. After receiving the resolve remote user ID request message from the PKMF of the relay UE, the PKMF of the remote UE obtains the SUPI corresponding to the remote user ID, and then sends a resolve remote user ID response (resolve remote user response) message to the PKMF of the relay UE, where the message carries the obtained SUPI. After receiving the resolve remote user ID response message from the PKMF of the remote UE, the PKMF of the relay UE sends the resolve remote user ID response message to the SMF of the relay UE, where the message carries the obtained SUPI.

In this way, according to the method 300, the SMF of the relay UE can find the PKMF of the relay UE, so that the SMF of the relay UE can obtain the permanent identifier information of the remote UE from the PKMF of the remote UE via the PKMF of the relay terminal. In this way, mapping between the remote UE report and a permanent identifier of the remote UE can be completed, and communication security of using the proximity-based service by the remote terminal via the relay terminal is ensured. For example, the PKMF of the relay UE is determined by using a remote UE identifier, and identity information of the remote UE is determined via the PKMF of the relay UE, to ensure that the remote UE is a secure UE and can use the proximity-based service via the relay terminal. In this way, the communication security of using the proximity-based service by the remote terminal via the relay terminal is ensured.

The following describes the method 300 with reference to an example.

### Example 1

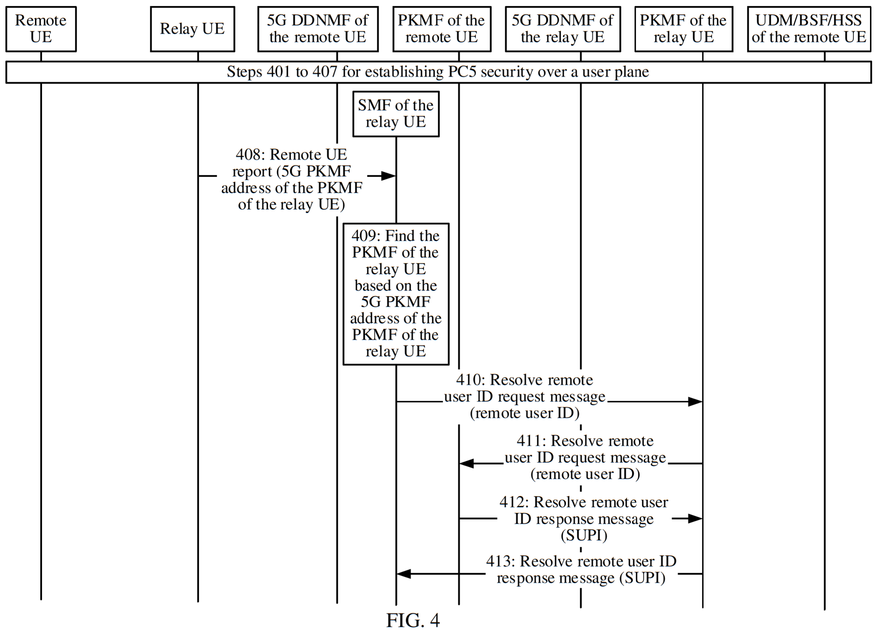

FIG. 4 is an example of the method 300. In this example, the relay UE provides the 5G PKMF address of the PKMF of the relay UE for the SMF of the relay UE when sending the remote UE report to the SMF of the relay UE, so that the SMF of the relay UE finds the PKMF of the relay UE based on the 5G PKMF address.

For step 401 to step 407, refer to step 0 to step 6 in a user plane PC5 security establishment procedure in conventional technologies. Details are not described.

Step 408: The relay UE sends the remote UE report to the SMF of the relay UE as specified in TS 23.304. Correspondingly, the SMF of the relay UE receives the remote UE report from the relay UE.

The remote UE report may be carried in the SM container. In addition to the remote user ID and the information about the remote UE, the remote UE report may further carry at least one 5G PKMF address. The 5G PKMF address is the 5G PKMF address of the PKMF of the relay UE.

Optionally, the 5G PKMF address of the PKMF of the relay UE may be included in the remote UE report (as shown in FIG. 4).

Optionally, the 5G PKMF address of the PKMF of the relay UE may alternatively be included in the SM container, but is outside the remote UE report (not shown in FIG. 4).

That the remote UE report and the 5G PKMF address of the PKMF of the relay UE are included in the SM container means that an AMF of the relay UE does not view or modify content in the SM container, but directly forwards the content in the SM container to the SMF of the relay UE.

Step 409: The SMF of the relay UE finds the PKMF of the relay UE based on the 5G PKMF address of the PKMF of the relay UE.

For example, if the 5G PKMF address can be directly used for communication with the PKMF, for example, the 5G PKMF address is the IP address of the PKMF, the SMF of the relay UE subsequently uses the address to communicate with the PKMF corresponding to the address, and obtains the SUPI of the remote UE.

For example, if the 5G PKMF address cannot be directly used for communication with the PKMF, the SMF of the relay UE may obtain, from another network element or device, information that can be used to address the PKMF of the relay UE, to subsequently communicate with the PKMF of the relay UE. For example, the SMF of the relay UE may obtain, from the DNS server or the NRF, the information used to address the PKMF of the relay UE. The information used to address the PKMF of the relay UE may be the address information in the FQDN format, the address information in the NAI format, the IP address, or the like of the PKMF of the relay UE mentioned above.

After the PKMF of the relay UE is found, the SUPI of the remote UE may be obtained by using subsequent step 410 to step 413. For step 410 to step 413, refer to step 8a to step 8d in the user plane PC5 security establishment procedure in the conventional technologies or step 304 in FIG. 3. Details are not described again.

### Example 2

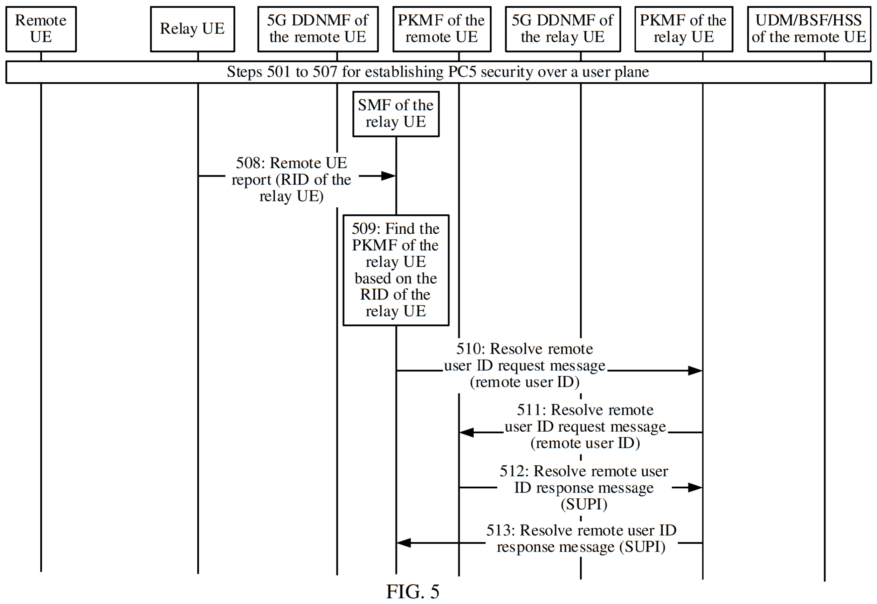

FIG. 5 is another example of the method 300. In this example, the relay UE provides the RID of the relay UE for the SMF of the relay UE when sending the remote UE report to the SMF of the relay UE, so that the SMF of the relay UE finds the PKMF of the relay UE based on the RID.

For step 501 to step 507, refer to step 0 to step 6 in a user plane PC5 security establishment procedure in conventional technologies. Details are not described.

Step 508: The relay UE sends the remote UE report to the SMF of the relay UE as specified in TS 23.304. Correspondingly, the SMF of the relay UE receives the remote UE report from the relay UE.

The remote UE report may be carried in the SM container. In addition to the remote user ID and the information about the remote UE, the remote UE report may additionally carry a RID. The RID is the RID of the relay UE.

Optionally, the RID of the relay UE may be included in the remote UE report (as shown in FIG. 5).

Optionally, the RID of the relay UE may alternatively be included in the SM container, but is outside the remote UE report (not shown in FIG. 5).

That the remote UE report and the RID of the relay UE are included in the SM container means that an AMF of the relay UE does not view or modify content in the SM container, but directly forwards the content in the SM container to the SMF of the relay UE.

Step 509: The SMF of the relay UE finds the PKMF of the relay UE based on the RID of the relay UE.

For example, if the RID can be directly used for communication with the PKMF, the SMF of the relay UE subsequently uses the RID to communicate with the PKMF of the relay UE, and obtains the SUPI of the remote UE.

For example, if the RID cannot be directly used for communication with the PKMF, the SMF of the relay UE may obtain, from another network element or device, information that can be used to address the PKMF of the relay UE, to subsequently communicate with the PKMF of the relay UE. For example, the SMF of the relay UE may obtain, from the DNS server or the NRF, the information used to address the PKMF of the relay UE. The information used to address the PKMF of the relay UE may be the address information in the FQDN format, the address information in the NAI format, the IP address, or the like of the PKMF of the relay UE mentioned above.

After the PKMF of the relay UE is found, the SUPI of the remote UE may be obtained by using subsequent step 510 to step 513. For step 510 to step 513, refer to step 8a to step 8d in the user plane PC5 security establishment procedure in the conventional technologies or step 304 in FIG. 3. Details are not described again.

### Example 3

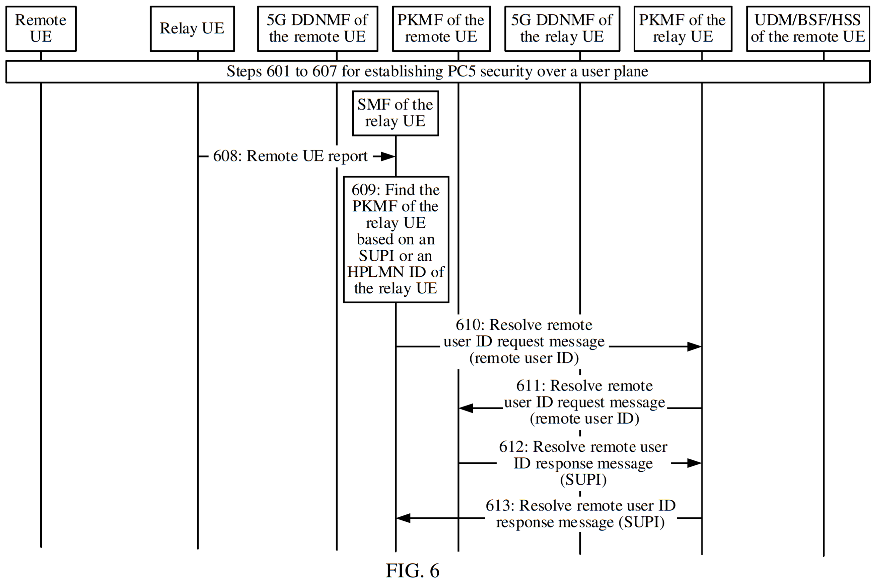

FIG. 6 is another example of the method 300. In this example, after receiving the remote UE report from the relay UE, the SMF of the relay UE may search for the PKMF of the relay UE or obtain information used to address the PKMF of the relay UE, to subsequently communicate with the PKMF of the relay UE.

For step 601 to step 608, refer to step 0 to step 7 in a user plane PC5 security establishment procedure in conventional technologies. Details are not described.

Step 609: After the SMF of the relay UE receives the remote UE report from the relay UE, if the SUPI of the remote UE is not available in the SMF of the relay UE, the SMF of the relay UE obtains the information used to address the PKMF of the relay UE.

For example, the SMF of the relay UE may determine, according to a local policy, how to perform search. For example, if it is specified in the local policy of the SMF of the relay UE that the SMF of the relay UE may search for the PKMF of the relay UE based on the HPLMN ID, the SMF of the relay UE may determine, based on an ID of an HPLMN in which the SMF of the relay UE is located, a PKMF that needs to be connected, namely, the PKMF of the relay UE.

For example, the SMF of the relay UE may obtain the SUPI of the relay UE from locally stored context information based on the PDU session ID, and then obtain, based on the SUPI of the relay UE, the information about the PKMF that needs to be connected. For example, the SMF of the relay UE may obtain, from the NRF based on the SUPI of the relay UE, the information used to address the PKMF of the relay UE. The PDU session is a session used by the relay UE to perform transmission of the service of the remote UE.

For example, the SMF of the relay UE may obtain the SUPI of the relay UE from locally stored context information based on the PDU session ID, obtain, from the 5G DDNMF of the relay UE or the PCF based on the SUPI of the relay UE, the information used to address the PKMF of the relay UE, then use the obtained information to directly or indirectly (for example, via the DNS server or the NRF) determine information about the PKMF that needs to be connected, namely, the PKMF of the relay UE.

For example, the SMF of the relay UE may obtain the SUPI of the relay UE from locally stored context information based on the PDU session ID, determine the RID of the relay UE based on the SUPI of the relay UE, and then determine, based on the RID of the relay UE, the PKMF that needs to be connected, namely, the PKMF of the relay UE.

After the PKMF of the relay UE is found, the SUPI of the remote UE may be obtained by using subsequent step 610 to step 613. For step 610 to step 613, refer to step 8a to step 8d in the user plane PC5 security establishment procedure in the conventional technologies or step 304 in FIG. 3. Details are not described again.

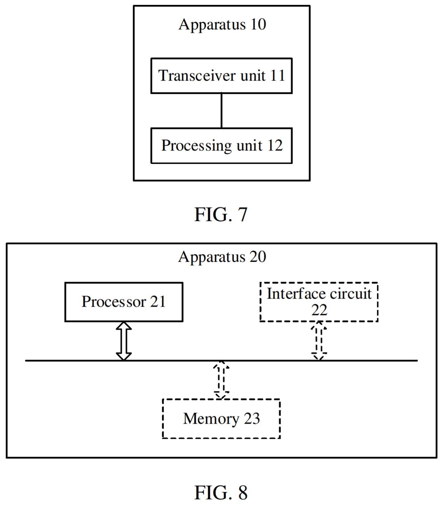

The foregoing describes in detail the method provided in this application with reference to FIG. 3 to FIG. 6. The following describes in detail apparatus embodiments of this application with reference to FIG. 7 and FIG. 8.

It may be understood that, to implement functions in the foregoing embodiments, the apparatus in FIG. 5 or FIG. 6 includes a corresponding hardware structure and/or software module for performing each function. A person skilled in the art should be easily aware that, in combination with the units and the method steps in the examples described in embodiments disclosed in this application, this application can be implemented by using hardware or a combination of hardware and computer software.

FIG. 7 and FIG. 8 each are a diagram of a structure of a possible apparatus according to an embodiment of this application. These apparatuses may be configured to implement a function of the SMF of the relay UE or the relay UE in the foregoing method embodiment, and therefore can also achieve the beneficial effects in the foregoing method embodiment.

As shown in FIG. 7, an apparatus 10 includes a transceiver unit 11 and a processing unit 12.

When the apparatus 10 is configured to implement a function of the SMF of the terminal in the foregoing method embodiment, the transceiver unit 11 is configured to receive a remote terminal report from the relay terminal when a remote terminal uses a proximity-based service via the relay terminal, where the remote terminal report corresponds to the remote terminal. The transceiver unit 11 and/or the processing unit 12 are/is configured to obtain first information based on the remote terminal report, where the first information includes information about the relay terminal and/or information about a proximity-based service key management function of the relay terminal. The transceiver unit 11 and/or the processing unit 12 are/is further configured to obtain first address information of the proximity-based service key management function of the relay terminal based on the first information, where the first address information indicates a communication address of the proximity-based service key management function of the relay terminal. The transceiver unit 11 is further configured to obtain permanent identifier information of the remote terminal from a proximity-based service key management function of the remote terminal based on the first address information via the proximity-based service key management function of the relay terminal.

In a possible implementation, the transceiver unit 11 and/or the processing unit 12 are/is specifically configured to obtain the first information when the permanent identifier information of the remote terminal is not available in the session management function of the relay terminal.

In a possible implementation, the information about the relay terminal includes a RID of the relay terminal, an HPLMN identifier of the relay terminal, and/or identification information of the relay terminal.

In a possible implementation, the information about the proximity-based service key management function of the relay terminal includes the first address information.

In a possible implementation, the information about the proximity-based service key management function of the relay terminal includes identification information of the proximity-based service key management function of the relay terminal, and the identification information of the proximity-based service key management function of the relay terminal is used to obtain the first address information.

In a possible implementation, the transceiver unit 11 is specifically configured to receive a first message from the relay terminal, where the first message includes the remote terminal report. The first message further includes the first information, or the remote terminal report includes the first information. The processing unit 11 is further specifically configured to obtain the first information from the first message or the remote terminal report.

In a possible implementation, the information about the relay terminal includes the identification information of the relay terminal. The processing unit 11 is further specifically configured to obtain the identification information of the relay terminal based on identification information of a session, where the session is a session used by the relay terminal to perform transmission of a service of the remote terminal.

In a possible implementation, the information about the relay terminal includes the home public land mobile network HPLMN identifier of the relay terminal. The processing unit 11 is further specifically configured to obtain an HPLMN identifier of the session management function of the relay terminal, where the HPLMN identifier of the session management function of the relay terminal is the same as the HPLMN identifier of the relay terminal.

In a possible implementation, the transceiver unit 11 and/or the processing unit 12 are/is further specifically configured to: obtain second address information of the proximity-based service key management function of the relay terminal based on the first information, where the second address information includes address information in an FQDN format and/or address information in a NAI format; and obtain the first address information based on the second address information.

In a possible implementation, the transceiver unit 11 and/or the processing unit 12 are/is further specifically configured to: obtain second information based on the identification information of the relay terminal, where the second information includes the RID of the relay terminal, the HPLMN identifier of the relay terminal, and/or identification information of the proximity-based service key management function of the relay terminal; and obtain the second address information of the proximity-based service key management function of the relay terminal based on the second information.

When the apparatus 10 is configured to implement the function of the terminal in the foregoing method embodiment, the processing unit 12 is configured to determine a first message when a remote terminal uses a proximity-based service via the relay terminal, where the first message includes first information and a remote terminal report corresponding to the remote terminal, or the first message includes a remote terminal report and the remote terminal report includes first information. The first information includes information about the relay terminal and/or information about a proximity-based service key management function of the relay terminal. The transceiver unit 11 is configured to send the first message to a session management function of the relay terminal.

In a possible implementation, the information about the relay terminal includes a RID of the relay terminal, an HPLMN identifier of the relay terminal, and/or identification information of the relay terminal.

In a possible implementation, the information about the proximity-based service key management function of the relay terminal includes first address information of the proximity-based service key management function of the relay terminal, where the first address information indicates a communication address of the proximity-based service key management function of the relay terminal.

In a possible implementation, the information about the proximity-based service key management function of the relay terminal includes identification information of the proximity-based service key management function of the relay terminal, and the identification information of the proximity-based service key management function of the relay terminal is used to obtain first address information. The first address information indicates a communication address of the proximity-based service key management function of the relay terminal.

For more detailed descriptions of the transceiver unit 11 and the processing unit 12, refer to related descriptions in the foregoing method embodiment. Details are not described herein again.

As shown in FIG. 8, an apparatus 20 includes a processor 21. The processor 21 is coupled to a memory 23, and the memory 23 is configured to store instructions. When the apparatus 20 is configured to implement the foregoing method, the processor 21 is configured to execute the instructions in the memory 23, to implement a function of the foregoing processing unit 12.

Optionally, the apparatus 20 further includes the memory 23.

Optionally, the apparatus 20 further includes an interface circuit 22. The processor 21 and the interface circuit 22 are coupled to each other. It may be understood that the interface circuit 22 may be a transceiver or an input/output interface. When the apparatus 20 is configured to implement the foregoing method, the processor 21 is configured to execute the instructions to implement the function of the foregoing processing unit 12, and the interface circuit 22 is configured to implement a function of the foregoing transceiver unit 11.

For example, when the apparatus 20 is a chip used in an SMF of a relay terminal or a relay terminal, the chip implements a function of the SMF of the relay terminal or the relay terminal in the foregoing method embodiment. The chip receives information from another module (for example, a radio frequency module or an antenna) in the SMF of the relay terminal or the relay terminal, where the information is sent by another apparatus to the SMF of the relay terminal or the relay terminal. Alternatively, the chip sends information to another module (for example, a radio frequency module or an antenna) in the SMF of the relay terminal or the relay terminal, where the information is sent by the SMF of the relay terminal or the relay terminal to another apparatus.

This application further provides a communication apparatus, including a processor. The processor is coupled to a memory. The memory is configured to store a computer program or instructions and/or data. The processor is configured to: execute the computer program or the instructions stored in the memory, or read the data stored in the memory, to perform the method in the foregoing method embodiment. Optionally, there are one or more processors. Optionally, the communication apparatus includes the memory. Optionally, there are one or more memories. Optionally, the memory and the processor are integrated together or disposed separately.

This application further provides a chip, including a processor. The processor is coupled to a memory. The memory is configured to store a computer program or instructions, and the processor is configured to execute the computer program or the instructions stored in the memory, to implement the method performed by the SMF of the relay terminal or the relay terminal in the foregoing method embodiment.

This application further provides a computer-readable storage medium. The computer-readable storage medium stores computer instructions used to implement the method performed by the SMF of the relay terminal or the relay terminal in the foregoing method embodiment.

This application further provides a computer program product, including instructions. When the instructions are executed by a computer, the method performed by the SMF of the relay terminal or the relay terminal in the foregoing method embodiment is implemented.

This application further provides a communication system. The communication system includes at least one of the SMF of the relay terminal or the relay terminal in the foregoing embodiments.

For explanations and beneficial effects of related content of any one of the apparatuses provided above, refer to the corresponding method embodiment provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in the SMF of the relay terminal or the relay terminal. Certainly, the processor and the storage medium may alternatively exist in the SMF of the relay terminal or the relay terminal as discrete components.

All or a part of the foregoing embodiments may be implemented by using software, hardware, firmware, or any combination thereof. When the software is used to implement the foregoing embodiments, all or a part of the foregoing embodiments may be implemented in a form of a computer program product. The computer program product includes one or more computer programs or instructions. When the computer programs or instructions are loaded and executed on a computer, all or a part of the procedures or functions according to embodiments of this application are executed. The computer may be a general-purpose computer, a dedicated computer, a computer network, a network device, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a session management function of a relay terminal, a remote terminal report from the relay terminal when a remote terminal uses a proximity-based service via the relay terminal, wherein the remote terminal report corresponds to the remote terminal;
obtaining, by the session management function of the relay terminal, first information based on the remote terminal report, wherein the first information comprises information about the relay terminal and/or information about a proximity-based service key management function of the relay terminal;
obtaining, by the session management function of the relay terminal, first address information of the proximity-based service key management function of the relay terminal based on the first information, wherein the first address information indicates a communication address of the proximity-based service key management function of the relay terminal; and
obtaining, by the session management function of the relay terminal, permanent identifier information of the remote terminal from a proximity-based service key management function of the remote terminal based on the first address information via the proximity-based service key management function of the relay terminal.

2. The method according to claim 1, wherein the obtaining, by the session management function of the relay terminal, first information based on the remote terminal report comprises:
obtaining, by the session management function of the relay terminal, the first information when the permanent identifier information of the remote terminal is not available in the session management function of the relay terminal.

3. The method according to claim 1 or 2, wherein the information about the relay terminal comprises a routing indicator RID of the relay terminal, a home public land mobile network HPLMN identifier of the relay terminal, and/or identification information of the relay terminal.

4. The method according to any one of claims 1 to 3, wherein the information about the proximity-based service key management function of the relay terminal comprises the first address information.

5. The method according to any one of claims 1 to 3, wherein the information about the proximity-based service key management function of the relay terminal comprises identification information of the proximity-based service key management function of the relay terminal, and the identification information of the proximity-based service key management function of the relay terminal is used to obtain the first address information.

6. The method according to any one of claims 1 to 5, wherein
the receiving, by a session management function of a relay terminal, a remote terminal report from the relay terminal comprises: receiving, by the session management function of the relay terminal, a first message from the relay terminal, wherein the first message comprises the remote terminal report; and
the first message further comprises the first information, or the remote terminal report comprises the first information, and the obtaining, by the session management function of the relay terminal, first information comprises: obtaining, by the session management function of the relay terminal, the first information from the first message or the remote terminal report.

7. The method according to any one of claims 1 to 4, wherein the information about the relay terminal comprises the identification information of the relay terminal, and the obtaining, by the session management function of the relay terminal, first information comprises:
obtaining, by the session management function of the relay terminal, the identification information of the relay terminal based on identification information of a session, wherein the session is a session used by the relay terminal to perform transmission of a service of the remote terminal.

8. The method according to claim 1, 2, 3, 4, 5, or 7, wherein the information about the relay terminal comprises the home public land mobile network HPLMN identifier of the relay terminal, and the obtaining, by the session management function of the relay terminal, first information comprises:
obtaining, by the session management function of the relay terminal, an HPLMN identifier of the session management function of the relay terminal, wherein the HPLMN identifier of the session management function of the relay terminal is the same as the HPLMN identifier of the relay terminal.

9. The method according to claim 1, 2, 3, 5, 6, 7, or 8, wherein
the obtaining, by the session management function of the relay terminal, first address information of the proximity-based service key management function of the relay terminal based on the first information comprises:
obtaining, by the session management function of the relay terminal, second address information of the proximity-based service key management function of the relay terminal based on the first information, wherein the second address information comprises address information in a fully qualified domain name FQDN format and/or address information in a network access identifier NAI format; and
obtaining, by the session management function of the relay terminal, the first address information based on the second address information.

10. The method according to claim 9, wherein the first information is the identification information of the relay terminal, and the obtaining, by the session management function of the relay terminal, second address information of the proximity-based service key management function of the relay terminal based on the first information comprises:
obtaining, by the session management function of the relay terminal, second information based on the identification information of the relay terminal, wherein the second information comprises: the routing indicator RID of the relay terminal, the home public land mobile network HPLMN identifier of the relay terminal, and/or the identification information of the proximity-based service key management function of the relay terminal; and
obtaining, by the session management function of the relay terminal, the second address information of the proximity-based service key management function of the relay terminal based on the second information.

11. A communication method, wherein the method comprises:
determining, by a relay terminal, a first message when a remote terminal uses a proximity-based service via the relay terminal, wherein the first message comprises first information and a remote terminal report corresponding to the remote terminal; or the first message comprises a remote terminal report and the remote terminal report comprises first information, wherein the first information comprises information about the relay terminal and/or information about a proximity-based service key management function of the relay terminal; and
sending, by the relay terminal, the first message to a session management function of the relay terminal.

12. The method according to claim 11, wherein the information about the relay terminal comprises a routing indicator RID of the relay terminal, a home public land mobile network HPLMN identifier of the relay terminal, and/or identification information of the relay terminal.

13. The method according to claim 11 or 12, wherein the information about the proximity-based service key management function of the relay terminal comprises first address information of the proximity-based service key management function of the relay terminal, wherein the first address information indicates a communication address of the proximity-based service key management function of the relay terminal.

14. The method according to claim 11 or 12, wherein the information about the proximity-based service key management function of the relay terminal comprises identification information of the proximity-based service key management function of the relay terminal, and the identification information of the proximity-based service key management function of the relay terminal is used to obtain first address information, wherein the first address information indicates a communication address of the proximity-based service key management function of the relay terminal.

15. A communication method, wherein the method comprises:
receiving, by a session management function of a relay terminal, a remote terminal report corresponding to a remote terminal when providing a proximity-based service for the remote terminal;
obtaining, by the session management function of the relay terminal, first information based on the remote terminal report, wherein the first information comprises information about the relay terminal and/or information about a proximity-based service key management function of the relay terminal;
obtaining, by the session management function of the relay terminal, first address information of the proximity-based service key management function of the relay terminal based on the first information, wherein the first address information indicates a communication address of the proximity-based service key management function of the relay terminal;
requesting, by the session management function of the relay terminal based on the first address information, to obtain permanent identifier information of the remote terminal from the proximity-based service key management function of the relay terminal; and
sending, by the proximity-based service key management function of the relay terminal to the session management function of the relay terminal, the permanent identifier information of the remote terminal obtained from a proximity-based service key management function of the remote terminal.

16. The method according to claim 15, wherein the obtaining, by the session management function of the relay terminal, first information based on the remote terminal report comprises:
obtaining, by the session management function of the relay terminal, the first information when the permanent identifier information of the remote terminal is not available in the session management function of the relay terminal.

17. The method according to claim 15 or 16, wherein the information about the relay terminal comprises a routing indicator RID of the relay terminal, a home public land mobile network HPLMN identifier of the relay terminal, and/or identification information of the relay terminal.

18. The method according to any one of claims 15 to 17, wherein the information about the proximity-based service key management function of the relay terminal comprises the first address information.

19. The method according to any one of claims 15 to 17, wherein the information about the proximity-based service key management function of the relay terminal comprises identification information of the proximity-based service key management function of the relay terminal, and the identification information of the proximity-based service key management function of the relay terminal is used to obtain the first address information.

20. The method according to any one of claims 15 to 19, wherein
the receiving, by a session management function of a relay terminal, a remote terminal report corresponding to a remote terminal comprises: receiving, by the session management function of the relay terminal, a first message from the relay terminal, wherein the first message comprises the remote terminal report; and
the first message further comprises the first information, or the remote terminal report comprises the first information, and the obtaining, by the session management function of the relay terminal, first information comprises: obtaining, by the session management function of the relay terminal, the first information from the first message or the remote terminal report.

21. A communication apparatus, comprising a module or a unit configured to perform the method according to any one of claims 1 to 14.

22. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 14 by using a logic circuit or by executing code instructions.

23. A chip, comprising a processor, wherein the processor is coupled to a memory, the memory is configured to store a computer program, and the processor is configured to execute the computer program stored in the memory, to implement the method according to any one of claims 1 to 14.

24. A computer-readable storage medium, wherein the storage medium stores a computer program or instructions; and when the computer program or the instructions are executed by a communication apparatus, the method according to any one of claims 1 to 14 is implemented.

25. A computer program product, comprising a computer program, wherein when the computer program is run, the method according to any one of claims 1 to 14 is implemented.

26. A communication system, comprising a session management function configured to perform the method according to any one of claims 1 to 10 and a relay terminal configured to perform the method according to any one of claims 11 to 14.

27. A communication method, wherein the method comprises:
sending, by a remote terminal to a session management function of a relay terminal, a remote terminal report corresponding to the remote terminal when receiving a proximity-based service provided by the relay terminal;
obtaining, by the session management function of the relay terminal, first information based on the remote terminal report, wherein the first information comprises information about the relay terminal and/or information about a proximity-based service key management function of the relay terminal;
obtaining, by the session management function of the relay terminal, first address information of the proximity-based service key management function of the relay terminal based on the first information, wherein the first address information indicates a communication address of the proximity-based service key management function of the relay terminal;
requesting, by the session management function of the relay terminal based on the first address information, to obtain permanent identifier information of the remote terminal from the proximity-based service key management function of the relay terminal; and
sending, by the proximity-based service key management function of the relay terminal to the session management function of the relay terminal, the permanent identifier information of the remote terminal obtained from a proximity-based service key management function of the remote terminal.
